# FASCICULE DE BREVET EUROPEEN

(11) **EP 1 937 011 B1**
(45) Date de publication et mention de la délivrance du brevet: **23.08.2017**
(21) Numéro de dépôt: 07024609.5
(22) Date de dépôt: 19.12.2007
(51) Int. Cl.: H04W 16/30, H04W 16/10, H04W 52/42

(54) **PROCÉDÉ ET DISPOSITION DE GESTION DYNAMIQUE DE SOUS-SECTEURS DANS UN SYSTÈME DE COMMUNICATION CELLULAIRE**
VERFAHREN UND BEREITSTELLUNG DER DYNAMISCHEN VERWALTUNG VON UNTERSEKTOREN IN EINEM ZELLULAREN KOMMUNIKATIONSSYSTEM
METHOD AND ARRANGEMENT FOR DYNAMIC MANAGEMENT OF SUB-SECTORS IN A CELLULAR COMMUNICATION SYSTEM

(30) Priorité: 20.12.2006 FR 0611187
(43) Date de publication de la demande: 25.06.2008
(73) Titulaire: SAGEMCOM BROADBAND SAS, 92500 Rueil Malmaison (FR)
(72) Inventeur: Bendenia, Walid, 92330 Sceaux (FR); Batariere, Mickaël, 28320 Ymeray (FR)
(74) Mandataire: Le Guen-Maillet

(56) Documents cités:
- WO-A-97/11571
- WO-A-97/40594
- WO-A1-96/37082

## Description

L'invention concerne le domaine des télécommunications radio et plus précisément la gestion de la ressource radio dans un tel système. Il s'agit, en particulier, d'une technique d'allocation dynamique de sous-secteurs par une station de base dans un tel système.

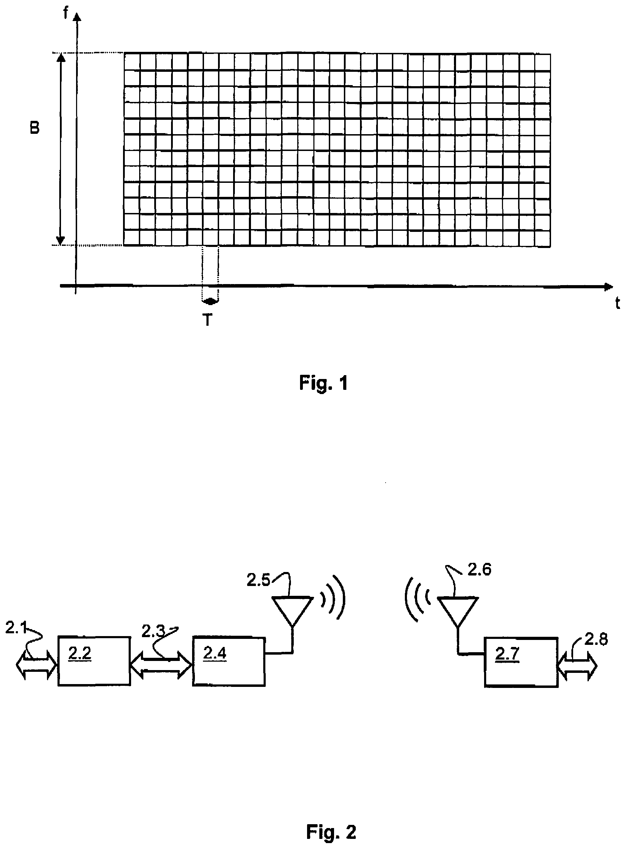

Les systèmes de télécommunication modernes par radio, et en particulier les systèmes dits cellulaires, utilisent divers moyens de partager la ressource radio entre les multiples utilisateurs du système. Pour ce faire, diverses techniques sont utilisées. Il est possible de partager le temps ce qui conduit à des systèmes dits TDMA (« Time Division Multiple Access » en anglais) où chaque utilisateur se voit réserver une période de temps pour ses communications. Il est également possible de partager les fréquences. Dans ce cas, la bande de fréquence est divisée en sous-bandes réparties entre les différents utilisateurs. Chaque sous-bande peut utiliser une ou plusieurs sous-porteuses. Dans le cadre d'un système basé sur le partage de la bande de fréquence en sous-porteuses, pour pouvoir utiliser des sous-bandes proches et donc obtenir une meilleure utilisation de la ressource, il est alors avantageux de choisir des sous-porteuses orthogonales entre elles pour limiter les interférences entre sous-porteuses. Ce système est appelé OFDMA (« Orthogonal Frequency Division Multiple Access » en anglais), c'est-à-dire système à accès multiple par répartition en fréquences orthogonales. La ressource radio d'un système OFDMA peut être représentée sous la forme d'un tableau temps fréquence comme illustré à la Fig. 1 où chaque ligne correspond à une sous-porteuse de la bande de fréquence utilisée et chaque colonne à une période de temps. Les unités élémentaires correspondant à une période de temps et à une sous-porteuse donnée définissent une unité de ressource radio pouvant être allouée. Ce système est utilisé, par exemple, dans le système connu sous le nom de WIMAX conforme à la norme « IEEES02.16°-2005 ».

De tels systèmes de communication sont dits cellulaires lorsque la communication est organisée par cellule. Chaque cellule est composée d'un point d'accès constitué d'une station de base, BS (« Base Station » en anglais) et d'une pluralité de stations clientes SS (« Subscriber Station » en anglais). Toutes les communications sont établies entre la station de base et une station cliente. Il s'ensuit que lorsque deux stations clientes veulent communiquer, ces communications passent obligatoirement par la station de base. Dans un tel système, une bande de fréquence définit un canal de communication. Ce canal est utilisé pour la communication entre la station de base et les stations clientes. La Fig. 2 définit la chaîne de transmission correspondant à un canal de transmission pour un secteur donné dans l'art antérieur. Un secteur est défini par le système émettant sur un canal de communication et toutes les stations clientes avec lesquelles il peut communiquer. Nous parlerons donc de cellule pour définir l'espace géographique défini par une station de base communiquant sur un canal de transmission donné et l'ensemble de stations clientes avec lesquelles la communication est possible depuis cette station de base sur le canal considéré. Nous parlerons de secteur pour parler plus précisément de la chaîne des équipements permettant cette communication associée. Cette chaîne est composée d'un émetteur-récepteur 2.2 échangeant des données numériques 2.1 avec un réseau de données, d'une part, et composant les signaux à émettre 2.3 en bande de base, d'autre part. Ces signaux à émettre 2.3 sont transmis à un module RF (Radio Fréquence) 2.4 chargé de transposer la fréquence du signal dans la bande correspondant au canal utilisé et d'émettre le signal via l'antenne 2.5. Cette antenne peut être constituée d'un réseau d'antenne, par exemple dans le cadre d'une transmission MIMO (« Multiple Input Multiple Output » en anglais). Ces signaux sont alors reçus par une station cliente via son antenne 2.6 et traités par un module 2.7 combinant les fonctions de module RF et d'émetteur-récepteur numérique qui va fournir les données sous forme numérique 2.8 au client.

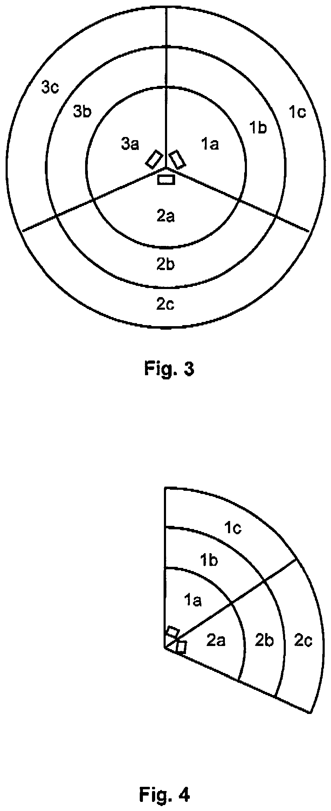

Une station de base peut gérer plusieurs secteurs définissant plusieurs cellules comme illustrés sur la Fig. 3. Sur cette figure, nous voyons une station de base comportant trois secteurs définissant trois cellules, chaque secteur étant défini par une chaîne de transmission comme celle illustrée sur la Fig. 2 et possédant donc sa propre antenne, ou réseau d'antenne. Les stations clientes présentes dans le secteur vont être réparties en trois zones ici représentées par la lettre, 1a, 1b et 1c pour le premier secteur, en fonction de la puissance d'émission nécessaire pour les atteindre. De cette façon, il est possible de n'utiliser que la puissance nécessaire lorsque l'on émet des données à destination exclusive de stations clientes appartenant à l'une de ces zones.

Dans un système de transmission radio, la puissance d'émission se répartit sur la bande de fréquence utilisée. Donc, la puissance maximum disponible à l'émetteur définit la puissance maximum d'émission d'une sous-bande et de ce fait la portée de l'émetteur. Dans un tel système, il est avantageux d'avoir la portée maximale tout en maximisant l'utilisation de la ressource radio et en maintenant un coût du système le plus bas possible. Le document WO 97/40594 décrit un système de communications sans fil dans lequel le canal de transmission est défini par une bande de fréquence et une transmission de type TDMA sur des fréquences de la bande. Il utilise des antennes composées d'un ensemble d'antennes élémentaires, la modulation de la puissance d'émission sur une fréquence se faisant en faisant varier le nombre d'antennes élémentaires attribué à l'émission du signal sur cette fréquence. L'invention propose une nouvelle gestion d'un canal de transmission radio dans un système de communication radio cellulaire basée sur l'utilisation de plusieurs antennes permettant une gestion dynamique du spectre disponible pour un secteur en sous-secteurs gérés par un même émetteur-récepteur numérique. Cette gestion dynamique comprend une gestion dynamique de l'allocation de la ressource de fréquence du canal et l'allocation dynamique de la puissance d'émission disponible entre les différents sous-secteurs. L'allocation de ces sous-secteurs au sein du canal de communication ainsi que les puissances d'émission des signaux correspondant à ces sous-secteurs sont coordonnées dynamiquement de façon à permettre une bonne utilisation de la ressource radio. L'invention est définie par les revendications indépendantes 1 et 7. Selon un mode particulier de réalisation de l'invention, l'étape de modulation de la puissance d'émission des signaux correspondant à chaque sous-secteur comporte une étape de multiplication par un coefficient (w1, w2) des données à émettre préalablement à la génération du signal en bande de base par transformée de Fourier inverse au sein de l'émetteur-récepteur.

Selon un mode particulier de réalisation de l'invention, l'étape de modulation de la puissance d'émission des signaux correspondant à chaque sous-secteur comporte une étape d'amplification paramétrée (p1, p2) des signaux à émettre.

Selon un mode particulier de réalisation de l'invention, le partage de la bande passante se fait sur la base de sous-bandes de fréquence.

Selon un mode particulier de réalisation de l'invention, le système étant basé sur un accès multiple par répartition en fréquences orthogonales, OFDM, l'unité de partage est la sous-porteuse du système.

Selon un mode particulier de réalisation de l'invention, le partage de la bande passante se fait sur la base d'une répartition en code dans un système basé sur un accès multiple par répartition en code, CDMA.

Selon un mode particulier de réalisation du dispositif, les moyens de modulation de la puissance d'émission des différents signaux comprennent des moyens de multiplier par un scalaire (w1, w2) les données à émettre préalablement à la génération du signal en bande de base par transformée de Fourier inverse au sein de l'émetteur-récepteur.

Selon un mode particulier de réalisation du dispositif les moyens de modulation de la puissance d'émission des différents signaux comprennent des moyens d'amplification paramétrée (p1, p2) des signaux à émettre.

Selon un mode particulier de réalisation du dispositif le partage de la bande passante se fait sur la base de sous-bandes de fréquence.

Selon un mode particulier de réalisation du dispositif le système étant basé sur un accès multiple par répartition en fréquences orthogonales, OFDM, l'unité de partage est la sous-porteuse du système.

Selon un mode particulier de réalisation du dispositif le partage de la bande passante se fait sur la base d'une répartition en code dans un système basé sur un accès multiple par répartition en code, CDMA.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 décrit une représentation de la ressource radio dans un système OFDMA.
La Fig. 2 décrit l'architecture de la chaîne de transmission dans l'art antérieur.
La Fig. 3 décrit l'organisation d'un exemple de station de base dans l'art antérieur.
La Fig. 4 décrit l'organisation d'un secteur dans un exemple de réalisation de l'invention.
La Fig. 5 décrit la répartition de la puissance spectrale d'émission et l'utilisation de la bande de fréquence dans l'exemple de réalisation de l'invention.
La Fig. 6 décrit l'architecture du système d'émission de l'exemple de réalisation de l'invention.
La Fig. 7 décrit schématiquement la structure de la trame d'un système selon le standard WIMAX (ou la norme IEEE802.16).

La portée est un des aspects les plus importants des systèmes de communication cellulaires en ce qu'elle détermine le nombre de stations de base devant être déployées pour couvrir un territoire donné. La portée est déterminée par le gain de l'antenne et par la puissance d'émission. Plus une antenne est directive et plus son gain est élevé. C'est une des raisons de la division des cellules en secteurs couverts par des antennes plus directives et donc de gain plus élevé qu'une antenne omnidirectionnelle. D'un autre côté, plus on multiplie le nombre de secteurs plus le coût de la station de base augmente du fait de la multiplication des chaînes d'émission, émetteur-récepteur numérique, module RF et antenne, devant être utilisés.

L'autre aspect important est également la bande passante du système. Cette bande passante est directement liée au taux d'utilisation de la ressource radio et donc de chaque canal de communication utilisé. On parle d'efficacité spectrale pour désigner la quantité d'informations transmises en un temps donné sur une bande de fréquence donnée. Comme la bande de fréquence utilisable dans de tels systèmes est généralement limitée, le découpage en secteur des cellules ne permet une augmentation de la bande passante que si la taille du canal de communication, donc la bande de fréquence qui lui est allouée, reste la même. Généralement un opérateur ne dispose que d'un nombre limité de canaux de communication pour déployer son réseau.

L'idée de base de l'invention est de répartir la communication entre la station de base et les stations clientes d'un même secteur entre plusieurs antennes. Ces différentes antennes se partagent le canal de communication associé au secteur. Cette disposition est illustrée par la Fig. 4 où le premier secteur de la cellule représentée à la Fig. 3 est maintenant servi par deux antennes. Le fait d'utiliser deux, ou plus, antennes au lieu d'une seule permet déjà un gain de portée dû au fait que l'on va utiliser des antennes plus directionnelles. Lorsque nous parlons d'une antenne, il peut s'agir d'un réseau d'antennes, fonctionnant par exemple en MIMO.

Le secteur est divisé en sous-secteurs qui couvrent seulement une partie du secteur initial. L'ensemble de ces sous-secteurs couvre l'étendue du secteur initial, voire un peu plus du fait du gain en portée. D'un autre côté, les différentes stations clientes se trouvant dans l'aire couverte par le secteur sont réparties au sein de groupes de stations clientes en fonction de la puissance d'émission nécessaire pour établir une communication entre la station de base et ses stations clientes en maintenant la performance de cette communication. Cette puissance d'émission dépend de la qualité de la transmission entre la station de base et la station cliente et donc de l'environnement et de la distance séparant ces deux stations. Elle est évaluée par mesure de la qualité de transmission par des mesures connues telles que la mesure de la puissance reçue, par exemple. Il est également possible de collecter des mesures faites par les stations elles-mêmes ou d'utiliser tout procédé de mesure de la qualité de la transmission. Ces données peuvent être conservées dans une base de données au niveau de la station de base pour servir à la répartition des stations clientes en groupes. Cette répartition est dynamique et évolue dans le temps en fonction de l'évolution du contexte radio et du déplacement éventuel des stations clientes.

La Fig. 4 nous montre donc un secteur divisé en deux sous-secteurs 1 et 2, les stations clientes étant classées dans les groupes 1a, 1b, 1c, 2a, 2b, 2c. La Fig. 4 montre une situation schématique où l'appartenance au groupe semble dépendre uniquement de la distance à la station de base. Il est évident que dans une situation réelle où la qualité de la transmission est dépendante de l'environnement, les frontières entre les groupes et entre les sous-secteurs ne sont pas aussi bien délimitées de façon géométrique.

La puissance d'émission étant répartie sur toute la bande de fréquence utilisée, il est possible d'augmenter la puissance d'émission pour atteindre des stations clientes distantes ou dans un environnement radio défavorable, par une réduction de cette bande de fréquence. Quand la bande de fréquence est divisée en sous-bandes, on peut réduire l'émission à certaines sous-bandes. Dans le cas d'une émission sur des sous-porteuses, on réduit le nombre de sous-porteuses utilisées. Si on n'utilise que la moitié des sous-porteuses, par exemple, on obtient un gain en puissance d'émission de 3 dB. L'utilisation de cette technique permet donc d'augmenter la portée du signal mais conduit dans une implémentation classique, de manière évidente, à une sous-utilisation du canal car on s'interdit d'émettre sur certaines parties de la bande de fréquence qui sont réservées par le canal. Cette limitation est contournée par l'exemple de réalisation de l'invention.

L'exemple de réalisation se place dans le cadre d'une transmission de type OFDMA où la bande de fréquence est répartie en un ensemble de sous-porteuses. Dans un tel cadre, le canal de communication, c'est-à-dire l'ensemble des sous-porteuses de la bande de fréquence du canal considéré en fonction du temps, va être réparti entre les différents sous-secteurs et au sein des sous-secteurs en fonction des différents groupes de stations clientes. De cette façon, à un instant donné, chaque antenne constituant le secteur émet uniquement un sous-ensemble des sous-porteuses du canal selon une puissance d'émission adaptée au groupe de stations clientes destinataires. Comme la puissance d'émission totale sur le canal de communication, toutes antennes comprises, est limitée, d'une part, par les capacités du système d'émission et, d'autre part, par la nécessité de limiter raisonnablement le niveau d'interférence, il est avantageux pour une bonne utilisation du canal de communication d'émettre à une puissance faible sur une antenne quand on émettra à forte puissance sur l'autre ou l'une des autres. De cette façon, lorsqu'une des antennes émet à forte puissance sur un nombre limité de sous-porteuses selon la technique précédemment décrite d'augmentation de la portée, les sous-porteuses libérées peuvent être utilisées pour l'émission par une ou plusieurs autres antennes pour des émissions à destination de groupes de stations clientes ne nécessitant pas une forte puissance d'émission.

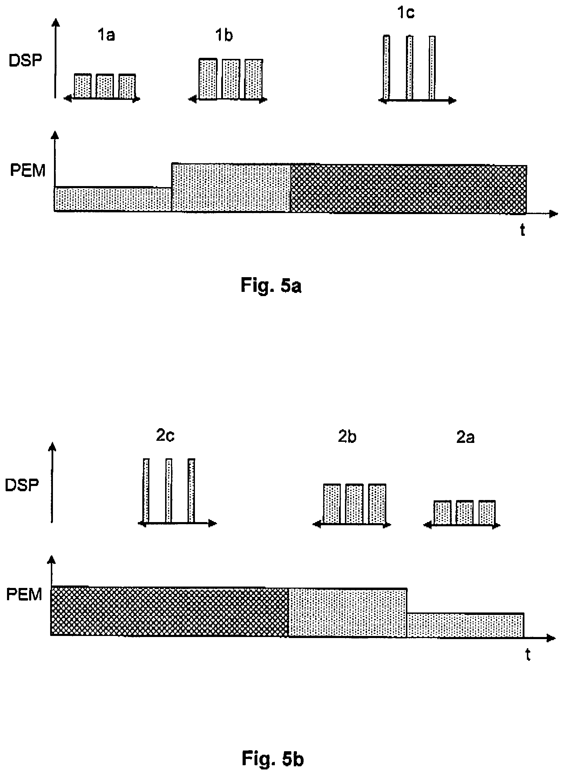

Ce mécanisme est illustré par les Fig. 5a et 5b. Ces figures illustrent l'évolution au cours du temps de la densité spectrale de puissance (DSP) du signal envoyé et de la puissance d'émission moyenne des signaux envoyés sur les deux antennes de l'exemple de réalisation de l'invention. La Fig. 5a illustre le signal du premier sous-secteur tandis que la Fig. 5b illustre le signal du second sous-secteur. Ces deux signaux et donc les deux figures sont à lire de manière synchrone sur une même échelle de temps. Sur ces figures sont représentées dans la partie haute de la figure l'utilisation de la bande de fréquence et la puissance d'émission de la partie utilisée de la bande. On voit à la Fig. 5a que, dans un premier temps, on émet à destination du groupe a du sous-secteur 1 en utilisant ¾ de la bande de fréquence avec une puissance d'émission basse. Ensuite, dans un deuxième temps, on émet à destination du groupe b du sous-secteur 1 en utilisant ¾ de la bande de fréquence avec cette fois une puissance d'émission plus élevée correspondant à la puissance moyenne maximale possible. Ensuite, dans un troisième temps, on émet à destination du groupe c du sous-secteur 1 en utilisant seulement un quart de la bande de fréquence avec cette fois une puissance d'émission maximum correspondant par contre toujours à la même puissance moyenne maximale possible pour l'antenne I.

De manière synchrone, sur la deuxième antenne, pendant que le sous-secteur 1 émet à puissance faible sur le groupe a le reste de la bande passante, le quart restant est utilisé à pleine puissance pour l'émission vers le groupe c du sous-secteur 2. Pendant que le sous-secteur 1 émet à puissance forte sur le groupe b le reste de la bande passante, le quart restant est utilisé toujours à pleine puissance pour l'émission vers le groupe c du sous-secteur 2. Dans un second temps, c'est le sous-secteur 1 qui utilise la technique d'augmentation de puissance à destination du groupe c tandis que le sous-secteur 2 envoie des données sur le reste du spectre au groupe b puis dans un second temps à puissance réduite au groupe a. On voit que de cette manière, il est possible d'émettre à pleine puissance sur une fraction de la bande de fréquence pour atteindre des stations clientes distantes, le groupe c, sur une des antennes tout en utilisant la fraction de bande de fréquence restante pour une émission à destination de stations clientes plus proches. Cette méthode permet, pour une puissance d'émission donnée, d'augmenter la portée du système tout en garantissant une pleine utilisation de la bande de fréquence et donc de la ressource radio du canal de communication alloué.

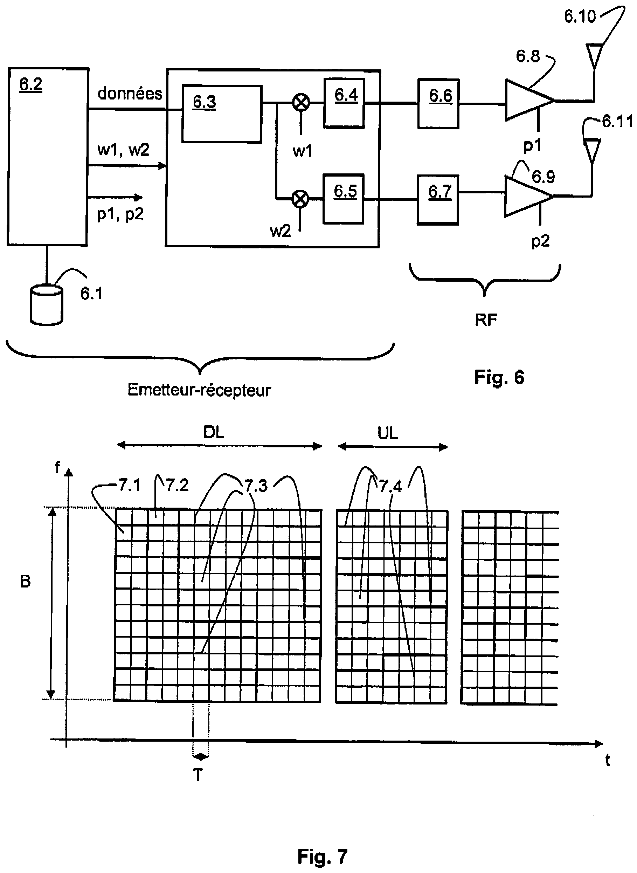

La Fig. 6 illustre l'architecture de la station de base pour un secteur selon un exemple de réalisation de l'invention. Cet exemple reste dans le cadre d'une implémentation à base de deux sous-secteurs et deux antennes, mais elle se généralise de manière immédiate à un nombre plus important de sous-secteurs et d'antennes. On y voit l'émetteur-récepteur numérique composé d'une couche MAC («Médium Access Control» en anglais) qui accède à la base de données 6.1 contenant les informations sur les appartenances aux différents groupes des différentes stations clientes. Au sein de cette couche MAC, les données à transmettre sont donc regroupées en fonction des groupes destinataires. C'est également cette couche 6.2 qui gère l'allocation des sous-porteuses aux différents sous-secteurs. Elle gère aussi les allocations de puissance entre les différents sous-secteurs. Les données sont réparties en fonction du groupe destinataire en différentes rafales (« burst » en anglais) de données réparties au sein du canal de communication. Les données ainsi organisées sont envoyées à un module 6.3 chargé de calculer les codes de redondances et de convertir les données en symboles de transmission. Ces symboles sont alors, en fonction de leur appartenance aux rafales de données, répartis entre plusieurs, ici deux, modules de transformée de Fourier inverse 6.4 et 6.5 pour générer le signal en bande de base en vue de sa transmission au module RF. Préalablement à l'application des transformées de Fourier inverse, une multiplication par un coefficient permet un premier ajustement de la puissance du signal qui va être généré pour chaque sortie. Ces paramètres, ici w1 et w2, sont calculés par le module MAC 6.2. Ces signaux sont alors émis en direction des modules RF et transposés en fréquence pour correspondre au canal de communication alloué par les modules de transposition 6.6 et 6.7. Un dernier ajustement des puissances des signaux est effectué par des amplificateurs 6.8 et 6.9 commandés par des paramètres p1 et p2 également calculés par la couche MAC 6.2. Les signaux correspondant à chaque sous-secteur sont alors émis par l'antenne correspondante 6.10 ou 6.11.

Dans le cas où l'invention est implémentée dans le cadre de la norme IEEE 802.16, la norme prévoit les fonctionnalités nécessaires à l'implémentation de l'invention. La Fig. 7 illustre schématiquement la trame WIMAX en TDD (« Time Division Duplex » en anglais) comprenant deux phases. Dans une première phase dite descendante, DL (« Down Link » en anglais), de communication de la station de base vers les stations clientes, la communication démarre par l'émission d'un préambule 7.1 transmis sur la totalité du canal et des informations sur l'allocation de la ressource radio pour cette phase descendante. On y trouve également l'allocation des données 7.2 de la phase montante, UL (« Up Link » en anglais) puis les différentes rafales de données émises 7.3. Après un temps de garde destiné à absorber les différences de délai de propagation des différentes stations clientes, le canal est occupé par les rafales de données montantes 7.4. La norme IEEE802.16 supporte la possibilité d'envoyer sur la voie descendante des rafales de données dans un mode dédié (zone STC), dans lequel les stations clientes concernées n'utilisent que les pilotes nécessaires pour décoder leurs rafales et non tous les pilotes émis par la station de base. Dans ce cadre, la découpe des données en fonction des différents groupes des différents sous-secteurs utilise ce découpage en rafales et va allouer les différentes rafales aux différents sous-secteurs et groupes de stations clientes. La puissance d'émission des différentes rafales peut être ajustée grâce au champ « power boosting » prévu dans la structure DL MAP IE servant à décrire l'allocation des ressources radio dans la norme.

Les données de chaque rafale sont envoyées selon un mode physique particulier. Ce mode physique est défini par la modulation utilisée contenant plus ou moins de symboles et par le choix du code correcteur d'erreur choisi. Plus la qualité de la transmission est bonne, plus il est possible de choisir une modulation utilisant un grand nombre de symboles et un code correcteur apportant peu de redondance. Au contraire, quand la qualité de transmission est moins bonne, il est nécessaire d'utiliser un mode physique plus robuste constitué d'une modulation utilisant un nombre moindre de symboles et un code correcteur apportant plus de redondance. L'invention permet de transmettre ponctuellement avec une plus grande puissance d'émission pour combattre efficacement le niveau de bruit et d'interférence perçu par les stations clientes. Elle permet ainsi d'utiliser des modes physiques moins robustes augmentant d'autant la bande passante du canal de transmission. L'invention permet également de diminuer statistiquement l'énergie émise dans chaque sous-secteur, ce qui réduit significativement le niveau d'interférence pour les cellules voisines.

L'homme du métier comprendra que l'invention ici décrite dans le cadre du système de transmission cellulaire WIMAX pourra être utilisée dans tout type de réseau de communication entre un point d'accès et des stations clientes basé sur une transmission partageant la ressource radio, d'une part, sur une base temporelle et, d'autre part, sur une base fréquentielle. En particulier, il est possible d'implémenter l'invention dans un système où le partage du canal est basé sur un partage par code CDMA (« Code Division Multiple Access » en anglais). Dans ce cas, les différents signaux codés avec leurs codes respectifs sont envoyés via les différentes antennes avec une puissance adaptée selon l'invention. Elle permet d'améliorer l'utilisation du canal de transmission en multipliant le nombre d'antennes utilisées pour couvrir un secteur sans nécessiter la multiplication des modules émetteurs-récepteurs correspondants. Elle permet d'augmenter la portée du système tout en garantissant une très bonne utilisation de la ressource radio du canal de transmission et une bonne bande passante.

## Revendications

1. Procédé de transmission de données au sein d'un système de communication à accès multiple utilisant un canal de transmission défini par une bande de fréquence comprenant une pluralité de sous-porteuses et allouée à la transmission de signaux entre une station de base, comprenant une pluralité d'antennes, et un ensemble de stations clientes au sein d'une zone appelée secteur, l'ensemble des stations clientes étant divisé en groupes de stations clientes en fonction d'une puissance d'émission nécessaire pour établir une communication avec la station de base, **caractérisé en ce qu'**il comporte les étapes suivantes :
- une étape de définition d'une pluralité de sous-secteurs, chaque sous-secteur correspondant à une antenne,
- une étape d'allocation de sous-porteuses de la bande de fréquence du canal de transmission aux sous-secteurs, l'allocation des sous-porteuses entre les sous-secteurs étant faite de manière dynamique au cours du temps en fonction des groupes des stations clientes, et,
- pour chaque antenne, une étape d'émission de signaux, l'émission se faisant sur la ou les sous porteuses allouées au sous-secteur correspondant à ladite antenne,
, les signaux correspondant aux communications étant répartis dans le temps de façon à ce que, à un instant donné, les signaux émis par une antenne correspondant à un sous-secteur soient à destination des stations clientes d'un groupe de stations clientes, la puissance d'émission des signaux émis par chaque antenne étant modulée de manière synchronisée entre les antennes en fonction du temps et des groupes de stations clientes destinataires, lorsqu'une antenne émet à forte puissance sur des sous-porteuses, les autres sous-porteuses étant utilisées pour l'émission par une ou plusieurs autres antennes pour des émissions à destination de groupes de stations clientes ne nécessitant pas une forte puissance d'émission.

2. Procédé selon la revendication 1 où l'étape de modulation de la puissance d'émission des signaux correspondant à chaque sous-secteur comporte une étape de multiplication par un coefficient (w1, w2) des données à émettre préalablement à la génération du signal en bande de base par transformée de Fourier inverse au sein de l'émetteur-récepteur.

3. Procédé selon la revendication 2 où l'étape de modulation de la puissance d'émission des signaux correspondant à chaque sous-secteur comporte une étape d'amplification paramétrée (p1, p2) des signaux à émettre.

4. Procédé selon l'une des revendications 1 à 3 où le partage de la bande passante se fait sur la base de sous-bandes de fréquence.

5. Procédé selon la revendication 4 où le système étant basé sur un accès multiple par répartition en fréquences orthogonales, OFDM, l'unité de partage est la sous-porteuse du système.

6. Procédé selon l'une des revendications 1 à 3 où le partage de la bande passante se fait sur la base d'une répartition en code dans un système basé sur un accès multiple par répartition en code, CDMA.

7. Dispositif de transmission de données au sein d'un système de communication à accès multiple utilisant un canal de transmission défini par une bande de fréquence comprenant une pluralité de sous-porteuses et allouée à la transmission de signaux entre une station de base comprenant une pluralité d'antennes et un ensemble de stations clientes au sein d'une zone appelée secteur, **caractérisé en ce qu'**il comporte :
- des moyens de définition d'une pluralité de sous-secteurs, chaque sous-secteur correspondant à une antenne,
- des moyens d'allocation de sous-porteuses de la bande de fréquence du canal de transmission aux différents sous-secteurs, l'allocation des sous-porteuses entre les sous-secteurs étant faite de manière dynamique au cours du temps en fonction des groupes des stations clientes, et,
- des moyens d'émission des signaux pour chaque antenne, l'émission pour une antenne se faisant sur l'une des sous porteuses allouées au sous-secteur correspondant à l'antenne,
- des moyens de diviser l'ensemble des stations clientes en groupes de stations clientes en fonction de la puissance d'émission nécessaire pour établir une communication avec la station de base,
- des moyens de répartir les signaux correspondants aux communications dans le temps de façon à ce que, à un instant donné, les signaux émis par une antenne correspondant à un sous-secteur soient à destination des stations clientes d'un groupe de stations clientes,
- des moyens de modulation de la puissance d'émission des signaux émis par chaque antenne, la modulation étant faite de manière synchronisée entre les antennes en fonction du temps et des groupes de stations destinataires, et, lorsqu'une antenne émet à forte puissance sur des sous-porteuses, les autres sous-porteuses étant utilisées pour l'émission par une ou plusieurs autres antennes pour des émissions à destination de groupes de stations clientes ne nécessitant pas une forte puissance d'émission.

8. Dispositif selon la revendication 7 où les moyens de modulation de la puissance d'émission des différents signaux comprennent des moyens de multiplier par un scalaire (w1, w2) les données à émettre préalablement à la génération du signal en bande de base par transformée de Fourier inverse au sein de l'émetteur-récepteur.

9. Dispositif selon la revendication 7 où les moyens de modulation de la puissance d'émission des différents signaux comprennent des moyens d'amplification paramétrée (p1, p2) des signaux à émettre.

10. Dispositif selon l'une des revendications 7 à 9 où le partage de la bande passante se fait sur la base de sous-bandes de fréquence.

11. Dispositif selon la revendication 10 où le système étant basé sur un accès multiple par répartition en fréquences orthogonales, OFDM, l'unité de partage est la sous-porteuse du système.

12. Dispositif selon l'une des revendications 7 à 9 où le partage de la bande passante se fait sur la base d'une répartition en code dans un système basé sur un accès multiple par répartition en code, CDMA.

## Patentansprüche

1. Verfahren zur Datenübertragung in einem Kommunikationssystem mit Mehrfachzugang, das einen Übertragungskanal verwendet, der durch ein Frequenzband definiert ist, das eine Vielzahl von Unterträgerfrequenzen umfasst und der Übertragung von Signalen zwischen einer Basisstation, umfassend eine Vielzahl von Antennen, und einer Gesamtheit von Kundenstationen innerhalb einer Sektor genannten Zone zugewiesen ist, wobei die Gesamtheit der Kundenstationen in Gruppen von Kundenstationen in Abhängigkeit von einer notwendigen Sendeleistung für die Herstellung einer Kommunikation mit der Basisstation unterteilt ist, **dadurch gekennzeichnet, dass** es die folgenden Schritte umfasst:
- einen Schritt der Definition einer Vielzahl von Untersektoren, wobei jeder Untersektor einer Antenne entspricht,
- einen Schritt der Zuweisung von Unterträgerfrequenzen des Frequenzbandes des Übertragungskanals zu den Untersektoren, wobei die Zuweisung der Unterträgerfrequenzen zwischen den Untersektoren dynamisch mit der Zeit in Abhängigkeit von den Gruppen der Kundenstationen erfolgt, und
- für jede Antenne einen Schritt des Sendens von Signalen, wobei das Senden auf der oder den Trägerfrequenzen erfolgt, die dem der Antenne entsprechenden Untersektor zugewiesen sind,
wobei die den Kommunikationen entsprechenden Signale mit der Zeit derart verteilt werden, dass zu einem gegebenen Zeitpunkt die von einer einem Untersektor entsprechenden Antenne gesandten Signale in Richtung der Kundenstationen einer Gruppe von Kundenstationen gehen, wobei die Sendeleistung der von jeder Antenne gesandten Signale auf synchronisierte Weise zwischen den Antennen in Abhängigkeit von der Zeit und den Gruppen von Bestimmungskundenstationen moduliert wird, wenn eine Antenne mit starker Leistung auf Unterträgerfrequenzen sendet, wobei die anderen Unterträgerfrequenzen für das Senden von einer oder mehreren anderen Antennen für Sendungen in Richtung von Gruppen von Kundenstationen verwendet werden, die keine starke Sendeleistung erfordern.

2. Verfahren nach Anspruch 1, bei dem der Schritt der Modulation der Sendeleistung der Signale entsprechend jedem Untersektor einen Schritt der Vervielfachung mit einem Koeffizienten (w1, w2) der zu sendenden Daten vor der Erzeugung des Signals im Basisband durch inverse Fourier-Transformierte im Sender-Empfänger umfasst.

3. Verfahren nach Anspruch 2, bei dem der Schritt der Modulation der Sendeleistung der Signale entsprechend jedem Untersektor einen Schritt der parametrierten Verstärkung (p1, p2) der zu sendenden Signale umfasst.

4. Verfahren nach einem der Ansprüche 1 bis 3, bei dem die Teilung des Durchlassbandes auf Basis von Unterfrequenzbändern erfolgt.

5. Verfahren nach Anspruch 4, bei dem, wobei das System auf einem Mehrfachzugriff durch Verteilung in orthogonale Frequenzen, OFDM, erfolgt, die Teilungseinheit die Unterträgerfrequenz des Systems ist.

6. Verfahren nach einem der Ansprüche 1 bis 3, bei dem die Teilung des Durchlassbandes auf Basis einer Codeverteilung in einem System basierend auf einem Mehrfachzugriff durch Codeverteilung, CDMA, erfolgt.

7. Vorrichtung zur Datenübertragung in einem Kommunikationssystem mit Mehrfachzugang, das einen Übertragungskanal verwendet, der durch ein Frequenzband definiert ist, das eine Vielzahl von Unterträgerfrequenzen umfasst und der Übertragung von Signalen zwischen einer Basisstation, umfassend eine Vielzahl von Antennen, und einer Gesamtheit von Kundenstationen innerhalb einer Sektor genannten Zone zugewiesen ist, **dadurch gekennzeichnet, dass** es umfasst:
- Mittel zur Definition einer Vielzahl von Untersektoren, wobei jeder Untersektor einer Antenne entspricht,
- Mittel zur Zuweisung von Unterträgerfrequenzen des Frequenzbandes des Übertragungskanals zwischen den Untersektoren, wobei die Zuweisung der Unterträgerfrequenzen zwischen den Untersektoren dynamisch mit der Zeit in Abhängigkeit von den Gruppen der Kundenstationen erfolgt, und
- für jede Antenne Mittel zum Senden von Signalen, wobei das Senden auf einer der Trägerfrequenzen erfolgt, die dem der Antenne entsprechenden Untersektor zugewiesen sind,
- Mittel zum Unterteilen der Gesamtheit der Kundenstationen in Gruppen von Kundenstationen in Abhängigkeit von der notwendigen Sendeleistung, um eine Kommunikation mit der Basisstation herzustellen,
- Mittel zum Verteilen der Signale entsprechend den Kommunikationen mit der Zeit, so dass zu einem gegebenen Zeitpunkt die von einer Antenne entsprechend einem Untersektor gesandten Signale in Richtung der Kundenstationen einer Gruppe von Kundenstationen gehen,
- Mittel zur Modulation der Sendeleistung der von jeder Antenne gesandten Signale, wobei die Modulation auf synchronisierte Weise zwischen den Antennen in Abhängigkeit von der Zeit und den Gruppen von Bestimmungsstationen erfolgt, und wenn eine Antenne mit starker Leistung auf Unterträgerfrequenzen sendet, die anderen Unterträgerfrequenzen für das Senden durch eine oder mehrere andere Antennen für Sendungen in Richtung von. Gruppen von Kundenstationen verwendet werden, die keine starke Sendeleistung erfordern.

8. Vorrichtung nach Anspruch 7, bei der die Mittel zur Modulation der Sendeleistung der verschiedenen Signale Mittel zur Vervielfachung durch ein Skalar (w1, w2) der zu sendenden Daten vor der Erzeugung des Signals im Basisband durch inverse Fourier-Transformierte im Sender-Empfänger umfassen.

9. Vorrichtung nach Anspruch 7, bei der die Mittel zur Modulation der Sendeleistung der verschiedenen Signale Mittel zur parametrierten Verstärkung (p1, p2) der zu sendenden Signale umfassen.

10. Vorrichtung nach einem der Ansprüche 7 bis 9, bei der die Teilung des Durchlassbandes auf Basis der Unterfrequenzbänder erfolgt.

11. Vorrichtung nach Anspruch 10, bei der, wobei das System auf einem Mehrfachzugriff durch Verteilung in orthogonale Frequenzen, OFDM, erfolgt, die Teilungseinheit die Unterträgerfrequenz des Systems ist.

12. Vorrichtung nach einem der Ansprüche 7 bis 9, bei der die Teilung des Durchlassbandes auf Basis einer Codeverteilung in einem System basierend auf einem Mehrfachzugriff durch Codeverteilung, CDMA, erfolgt.

## Claims

1. Method for transmitting data within a multiple access communication system using a transmission channel defined by a frequency band comprising a plurality of sub-carriers and allocated to the transmission of signals between a base station, comprising a plurality of antennas, and a set of client stations within a zone called a sector, the set of client stations being divided into groups of client stations as a function of an emission power necessary to establish a communication with the base station, **characterized in that** it comprises the following steps:
- a step of defining a plurality of sub-sectors, each sub-sector corresponding to an antenna,
- a step of allocating sub-carriers of the frequency band of the transmission channel to the sub-sectors, the allocation of the sub-carriers between the sub-sectors being done in a dynamic manner over time as a function of the groups of client stations, and,
- for each antenna, a step of emitting signals, the emission being done on the sub-carrier or sub-carriers allocated to the sub-sector corresponding to the said antenna,
the signals corresponding to the communications being distributed over time in such a way that, at a given instant, the signals emitted by an antenna corresponding to a sub-sector are destined for client stations of a group of client stations, the emission power of the signals emitted by each antenna being modulated in a synchronized manner between the antennas as a function of time and of the groups of recipient client stations, when an antenna emits at high power on some sub-carriers, the other sub-carriers being used for the emission by one or more other antennas for emissions destined for groups of client stations not requiring a high emission power.

2. Method according to Claim 1 where the step of modulating the emission power of the signals corresponding to each sub-sector comprises a step of multiplication by a coefficient (w1, w2) of the data to be emitted prior to the generation of the baseband signal by inverse Fourier transform within the emitter-receiver.

3. Method according to Claim 2 where the step of modulating the emission power of the signals corresponding to each sub-sector comprises a step of parametrized amplification (p1, p2) of the signals to be emitted.

4. Method according to one of Claims 1 to 3 where the sharing of the bandwidth is done on the basis of frequency sub-bands.

5. Method according to Claim 4 where the system being based on orthogonal frequency division multiple access, OFDM, the sharing unit is the sub-carrier of the system.

6. Method according to one of Claims 1 to 3 where the sharing of the bandwidth is done on the basis of code division in a system based on code division multiple access, CDMA.

7. Device for transmitting data within a multiple access communication system using a transmission channel defined by a frequency band comprising a plurality of sub-carriers and allocated to the transmission of signals between a base station comprising a plurality of antennas and a set of client stations within a zone called a sector, **characterized in that** it comprises:
- means for defining a plurality of sub-sectors, each sub-sector corresponding to an antenna,
- means for allocating sub-carriers of the frequency band of the transmission channel to the various sub-sectors, the allocation of the sub-carriers between the sub-sectors being done in a dynamic manner over time as a function of the groups of client stations, and,
- means for emitting the signals for each antenna, the emission for an antenna being done on one of the sub-carriers allocated to the sub-sector corresponding to the antenna,
- means for dividing the set of client stations into groups of client stations as a function of the emission power necessary to establish a communication with the base station,
- means for distributing the signals corresponding to the communications over time in such a way that, at a given instant, the signals emitted by an antenna corresponding to a sub-sector are destined for client stations of a group of client stations,
- means for modulating the emission power of the signals emitted by each antenna, the modulation being done in a synchronized manner between the antennas as a function of time and of the groups of recipient stations, and, when an antenna emits at high power on some sub-carriers, the other sub-carriers being used for the emission by one or more other antennas for emissions destined for groups of client stations not requiring a high emission power.

8. Device according to Claim 7 where the means for modulating the emission power of the various signals comprise means for multiplying by a scalar (w1, w2) the data to be emitted prior to the generation of the baseband signal by inverse Fourier transform within the emitter-receiver.

9. Device according to Claim 7 where the means for modulating the emission power of the various signals comprise means for parametrized amplification (p1, p2) of the signals to be emitted.

10. Device according to one of Claims 7 to 9 where the sharing of the bandwidth is done on the basis of frequency sub-bands.

11. Device according to Claim 10 where the system being based on orthogonal frequency division multiple access, OFDM, the sharing unit is the sub-carrier of the system.

12. Device according to one of Claims 7 to 9 where the sharing of the bandwidth is done on the basis of code division in a system based on code division multiple access, CDMA.
